# FASCICULE DE BREVET EUROPEEN

(11) **EP 3 619 269 B1**
(45) Date de publication et mention de la délivrance du brevet: **17.02.2021**
(21) Numéro de dépôt: 18719585.4
(22) Date de dépôt: 30.04.2018
(51) Int. Cl.: C08L 91/00, C08L 95/00

(54) **FLUXANT BIOSOURCE POUR COMPOSITION BITUMINEUSE**
FLUSSMITTEL BIOLOGISCHEN URSPRUNGS FÜR BITUMINÖSE ZUSAMMENSETZUNG
BIOSOURCED FLUX FOR BITUMINOUS COMPOSITION

(30) Priorité: 02.05.2017 FR 1753841
(43) Date de publication de la demande: 11.03.2020
(73) Titulaire: Total Marketing Services, 92800 Puteaux (FR)
(72) Inventeur: BARDIN, Franck, 78240 Chambourcy (FR); BRUNON, Angélique, 92500 Rueil Malmaison (FR)
(74) Mandataire: August Debouzy
(86) Numéro de dépôt international: PCT/EP2018/061033
(87) Numéro de publication internationale: WO 2018/202621

(56) Documents cités:
- EP-A1- 3 095 839
- CN-A- 105 754 634
- FR-A1- 2 279 842
- US-A1- 2015 011 784
- GEOGHEGAN J T: "Waterless Hand Cleaners II", SOAP/COSMETICS/CHEMICAL SPECIALTIES,, vol. 48, no. 9, 1 septembre 1972 (1972-09-01), pages 60-62, XP001627614,

## Description

### DOMAINE DE L'INVENTION

L'invention concerne un fluxant biosourcé pour composition bitumineuse comprenant au moins une huile hydrocarbonée classée biodégradable, d'origine biologique et majoritairement isoparaffinique.

L'invention concerne également une composition bitumineuse comprenant ledit fluxant et son utilisation.

### CONTEXTE TECHNIQUE DE L'INVENTION

Le bitume est un matériau utilisé en très grandes quantités comme matériau de construction. Associé à des granulats, des fines ou des armatures, le bitume sert par exemple à la fabrication des chaussées routières et des chapes d'étanchéité sur les toitures ou dans des bassins de rétention. Le bitume se présente généralement sous la forme d'un matériau noir ayant une forte viscosité, voire solide à température ambiante.

Du fait de la viscosité élevée du bitume à température ambiante, sa mise en œuvre est problématique. Plusieurs techniques visant à diminuer la viscosité du bitume ont été développées, soit par chauffage, soit en le mettant sous forme d'émulsion, soit encore en le mélangeant avec des fluxants.

Les bitumes fluxés sont des compositions de bitume(s) dont on a abaissé la viscosité par addition de solvants volatils, les fluxants. L'addition de fluxant autorise des températures de mise en œuvre plus basses que les bitumes à partir desquels les bitumes fluxés sont obtenus. Les catégories les plus visqueuses de bitumes fluxés sont généralement réservées aux enduits superficiels, tandis que les plus fluides sont généralement utilisées pour l'imprégnation, la stabilisation des sols, pour la fabrication des émulsions et la préparation des enrobés à froid stockables.

Selon la terminologie adoptée dans le cadre du présent exposé, les liants bitumineux fluidifiés et les liants bitumineux fluxés sont regroupés dans une seule et même catégorie, les termes "fluxés" et "fluidifiés" étant ainsi considérés comme synonymes.

Traditionnellement, les bitumes fluxés sont obtenus par mélange à chaud du liant bitumineux et du fluxant. De manière générale, on connaît les fluxants d'origine pétrolière, les fluxants d'origine synthétique et les fluxants d'origine végétale.

Le document EP 1 645 595 décrit un fluxant à base de composés oxygénés.

Le document WO 2008/077888 décrit un fluxant comprenant moins de 50% en poids d'une coupe hydrocarbonée issue du raffinage du pétrole brut et plus de 50% en poids d'ester. Ce document ne décrit pas le fluxant selon la présente invention.

Lorsque la teneur en ester est trop élevée, il a été découvert que la pénétrabilité du bitume fluxé n'est pas satisfaisante, c'est-à-dire qu'elle est alors trop élevée. En particulier, dans le cas des bitumes purs (par exemple, exempt de polymère), elle ne remplit alors pas les conditions de la norme NF EN 15322.

Il subsiste donc le besoin de disposer d'un fluxant biosourcé permettant, une fois ajouté au bitume, d'obtenir un bitume fluxé répondant à la norme NF EN 15322, autrement dit, d'obtenir un bitume fluxé présentant une pénétrabilité à 25°C inférieure ou égale à 330 dixième de millimètre (300 1/10 mm), mesurée selon la norme NF EN 1426.

La demanderesse a trouvé de manière surprenante que ce besoin peut être satisfait par un nouveau fluxant comprenant notamment une quantité majoritaire d'une huile hydrocarbonée classée biodégradable et d'origine biologique, comprenant majoritairement des isoparaffines.

La présente invention a pour objectif de fournir un fluxant biosourcé ayant des performances améliorées, notamment en termes de pénétrabilité du bitume fluxé.

### RÉSUMÉ DE L'INVENTION

Ces objectifs sont atteints grâce à un nouveau fluxant.

L'invention concerne en premier lieu un fluxant comprenant :
- de 50% à 99% en poids d'au moins une huile hydrocarbonée qui comprend une teneur en poids d'isoparaffines allant de 90 à 100%, une teneur en poids de paraffines normales allant de 0 à 10% et une teneur en carbone d'origine biologique supérieure ou égale à 90 % par rapport au poids total de l'huile hydrocarbonée, et
- de 1% à 50% en poids d'au moins un composé d'origine végétale ou animale choisi parmi les acides gras en C6 à C24 sous forme acide, ester ou amide, par rapport au poids total du fluxant.

De préférence, le fluxant comprend :
- de 55 à 95% en poids, de préférence de 60 à 90% en poids, préférentiellement de 70 à 90% en poids, plus préférentiellement de 75 à 85% en poids, d'huile hydrocarbonée, et
- de 5 à 45% en poids, de préférence de 10 à 40% en poids, préférentiellement de 10 à 30% en poids, plus préférentiellement de 15 à 25% en poids, de composé(s) d'origine végétale ou animale,
par rapport au poids total du fluxant.

Selon un mode de réalisation de l'invention, le composé d'origine végétale ou animale comprend au moins un ester d'acides gras obtenu avec au moins un mono-alcool ou au moins un polyol présentant de 2 à 5 groupements hydroxyle.

Selon un mode de réalisation de l'invention, le composé d'origine végétale ou animale est choisi parmi les acides, esters ou amides d'huiles de pin, de colza, de tournesol, de ricin, d'arachide, de lin, de coprah, d'olive, de palme, de coton, de maïs, de suif, de saindoux, de palmiste, de soja, de courge, de pépin de raisin, d'argan, de jojoba, de sésame, de noix, de noisette, de bois de Chine, de riz.

Selon un mode de réalisation de l'invention, le composé d'origine végétale ou animale comprend au moins un acide gras d'huile de pin qui est de préférence un acide gras de tall oil. Selon un autre mode de réalisation de l'invention, le composé d'origine végétale ou animale est choisi parmi les esters méthyliques d'acide gras.

Selon un mode de réalisation de l'invention, le composé d'origine végétale ou animale comprend au moins 50% en poids, de préférence au moins 60% en poids, préférentiellement au moins 70% en poids d'acides et/ou esters choisis parmi les acides et/ou esters linoléiques et linoléniques et leurs mélanges.

Selon un mode de réalisation de l'invention, l'huile hydrocarbonée est choisie parmi les isoparaffines non-cycliques comprenant de 14 à 18 atomes de carbone.

Selon un mode de réalisation de l'invention, l'huile hydrocarbonée comprend :
- une teneur en poids d'isoparaffines allant de 90 à 100%, de préférence de 95 à 100% et préférentiellement de 98% à 100% par rapport au poids total de l'huile hydrocarbonée ; et/ou
- une teneur en carbone d'origine biologique supérieure ou égale à 95%, de préférence supérieure ou égale à 98% et préférentiellement de 100% ; et/ou
- une teneur en poids de paraffines normales inférieure ou égale à 10, de préférence inférieure ou égale à 5% et préférentiellement inférieure ou égale à 2% par rapport au poids total de l'huile hydrocarbonée ; et/ou
- une teneur en poids de composés naphténiques inférieure ou égale à 1%, de préférence inférieure ou égale à 0,5% et préférentiellement inférieure ou égale à 100 ppm par rapport au poids total de l'huile hydrocarbonée ; et/ou
- une teneur en poids de composés aromatiques inférieure ou égale à 500 ppm, de préférence inférieure ou égale à 300 ppm, préférentiellement inférieure ou égale à 100 ppm, plus préférentiellement inférieure ou égale à 50 ppm et avantageusement inférieure ou égale à 20 ppm, par rapport au poids total de l'huile hydrocarbonée.

Selon un mode de réalisation de l'invention, l'huile hydrocarbonée est une coupe hydrocarbonée ayant un intervalle de distillation allant de 230°C à 340°C, de préférence de 235°C à 330°C, plus préférentiellement de 240°C à 325°C et avantageusement de 240°C à 280°C, mesuré selon la norme ASTM D86.

L'invention concerne également l'utilisation, en tant que fluxant pour une composition bitumineuse, d'une composition comprenant au moins 50% en poids, par rapport au poids total de la composition, d'au moins une huile hydrocarbonée qui comprend une teneur en poids d'isoparaffines allant de 90 à 100%, une teneur en poids de paraffines normales allant de 0 à 10% et une teneur en carbone d'origine biologique supérieure ou égale à 90 % par rapport au poids total de l'huile hydrocarbonée, ladite composition comprenant éventuellement au moins 1% en poids, par rapport au poids total de la composition, d'au moins un composé d'origine végétale ou animale choisi parmi les acides gras en C6 à C24 sous forme acide, ester ou amide.

De préférence, l'huile hydrocarbonée utilisée selon l'invention est telle que définie dans la présente invention et/ou le composé d'origine végétale ou animale choisi parmi les acides gras en C6 à C24 sous forme acide, ester ou amide est tel que défini dans la présente invention.

L'invention concerne également une composition bitumineuse comprenant au moins un bitume et au moins un fluxant selon l'invention, de préférence en une quantité allant de 0,5 à 50%, préférentiellement de 1 à 40% et avantageusement de 1 à 20% en poids par rapport au poids total de la composition bitumineuse.

De préférence, la composition bitumineuse selon l'invention comprend en outre au moins un polymère, de préférence en une quantité allant de 0,5 à 20% en poids, de préférence de 1 à 10% en poids, préférentiellement de 1 à 6% en poids, par rapport au poids total de la composition bitumineuse.

Enfin, l'invention concerne un liant bitumineux obtenu à partir d'une composition bitumineuse selon l'invention comprenant en outre des granulats et/ou des charges minérales et/ou synthétiques.

Le fluxant selon l'invention présente un bon pouvoir solvant, lui permettant notamment d'abaisser la viscosité de la composition de bitume le comprenant.

Le fluxant selon l'invention permet en outre, une fois ajoutée à une composition de bitume, d'obtenir une composition bitumineuse fluxée présentant une faible pénétrabilité à 25°C et une température Bille-Anneau (TBA) élevée. En particulier, dans le cas des bitumes purs (exempts de polymère), le fluxant selon l'invention permet d'obtenir une composition bitumineuse fluxée présentant une pénétrabilité à 25°C inférieure ou égale à 330 dixième de millimètre (300 1/10 mm), mesurée selon la norme NF EN 1426, autrement dit une pénétrabilité satisfaisant les exigences réglementaires de la normes NF EN 15322.

### DESCRIPTION DETAILLÉE DE L'INVENTION

### Fluxant :

L'invention concerne tout d'abord un fluxant pour composition bitumineuse, lequel fluxant comprend :
- de 50% à 99% en poids d'au moins une huile hydrocarbonée qui comprend une teneur en poids d'isoparaffines allant de 90 à 100%, une teneur en poids de paraffines normales allant de 0 à 10% et une teneur en carbone d'origine biologique supérieure ou égale à 90 % par rapport au poids total de l'huile hydrocarbonée, et
- de 1% à 50% en poids d'au moins un composé d'origine végétale ou animale choisi parmi les acides gras en C₆ à C₂₄ sous forme acide, ester ou amide,
par rapport au poids total du fluxant.

La combinaison de l'huile hydrocarbonée majoritairement isoparaffinique issue de matière première d'origine biologique et du composé d'origine végétale ou animale dans le fluxant permet :
- d'augmenter la volatilité du fluxant par rapport à un fluxant comprenant uniquement un composé d'origine végétale ou animale et
- d'abaisser le point d'aniline et par conséquent d'augmenter le pouvoir solvant de la combinaison par rapport à un fluxant comprenant uniquement une coupe hydrocarbonée.

Il a notamment été découvert de manière surprenante qu'une quantité majoritaire de l'huile hydrocarbonée biosourcée par rapport au composé de type acide, ester ou amide, permet d'obtenir une pénétrabilité du bitume fluxé satisfaisante, en particulier une pénétrabilité plus faible que celle des bitumes fluxés selon l'art antérieur. Dans le cas des bitumes purs (sans polymère), le fluxant selon l'invention permet d'obtenir une pénétrabilité à 25°C respectant les exigences de la norme NF EN 15322, i.e. d'obtenir une pénétrabilité inférieure ou égale à 330 dixièmes de millimètre, mesurée selon la norme NF EN 1426.

A titre préliminaire on notera que, dans la description et les revendications suivantes, l'expression « compris entre » doit s'entendre comme incluant les bornes citées.

### Huile hydrocarbonée :

Le fluxant selon l'invention comprend une teneur d'huile hydrocarbonée allant de 50 à 99% en poids, de préférence de 55 à 95% en poids, préférentiellement de 60 à 90% en poids, plus préférentiellement de 65 à 85% en poids, encore plus préférentiellement de 70 à 85% en poids par rapport au poids total du fluxant.

L'huile hydrocarbonée du fluxant selon l'invention comprend une teneur en poids de composés isoparaffiniques supérieure ou égale à 90%, préférentiellement supérieure ou égale à 95 % et avantageusement supérieure ou égale à 98% par rapport au poids total de l'huile hydrocarbonée.

Selon un mode de réalisation, les composés isoparaffiniques présents dans l'huile hydrocarbonée définie selon l'invention comportent de 12 à 30 atomes de carbone, de préférence de 13 à 19 atomes de carbone, de préférence encore de 14 à 18 atomes de carbone.

L'huile hydrocarbonée du fluxant selon l'invention comprend une teneur en poids de paraffines normales inférieure ou égale à 10%, préférentiellement inférieure ou égale à 5 % et avantageusement inférieure ou égale à 2%. Les composés paraffines normales présents dans l'huile hydrocarbonée définie selon l'invention comportent de préférence de 12 à 30 atomes de carbone, de préférence de 13 à 19 atomes de carbone, de préférence encore de 14 à 18 atomes de carbone.

L'huile hydrocarbonée du fluxant selon l'invention comprend avantageusement une majorité d'isoparaffines et une minorité de paraffines normales. Ces isoparaffines sont avantageusement des isoparaffines non-cycliques. De préférence l'huile hydrocarbonée du fluxant a un ratio massique d'isoparaffines sur paraffines normales d'au moins 12:1, préférentiellement de 15:1 et plus préférentiellement de 20 :1. De manière encore plus avantageuse l'huile hydrocarbonée du fluxant selon l'invention ne contient pas de paraffines normales.

Selon un mode de réalisation, l'huile hydrocarbonée selon l'invention comprend une teneur en poids d'isoparaffines allant de 90% à 100% et une teneur en poids de paraffines normales allant de 0 à 10%, préférentiellement de 95% à 100% d'isoparaffines et de 0 à 5% de paraffines normales et plus préférentiellement de 98% à 100% d'isoparaffines et de 0 à 2 % de paraffines normales.

Selon un mode de réalisation, l'huile hydrocarbonée selon l'invention comprend de préférence une teneur en poids d'isoparaffines choisies parmi les alcanes comportant de 12 à 30 atomes de carbone, de préférence de 14 à 18 atomes de carbone, de préférence encore de 14 à 17 atomes de carbone allant de 90% à 100% et une teneur en poids de paraffines normales allant de 0 à 10%, préférentiellement de 95% à 100% d'isoparaffines et de 0 à 5% de paraffines normales et plus préférentiellement de 98% à 100% d'isoparaffines et de 0 à 2 % de paraffines normales.

Selon un mode de réalisation, l'huile hydrocarbonée mise en œuvre selon l'invention comprend :
- des isoparaffines ayant 15 atomes de carbone et des isoparaffines ayant 16 atomes de carbone en une quantité combinée allant de 80 à 98% en poids, par rapport au poids total de l'huile hydrocarbonée, ou
- des isoparaffines ayant 14 atomes de carbone, des isoparaffines ayant 15 atomes de carbone, des isoparaffines ayant 16 atomes de carbone et des isoparaffines ayant 17 atomes de carbone en une quantité combinée allant de 80 à 98% en poids, par rapport au poids total de l'huile hydrocarbonée, ou
- des isoparaffines ayant 16 atomes de carbone, des isoparaffines ayant 17 atomes de carbone et des isoparaffines ayant 18 atomes de carbone en une quantité combinée allant de 80 à 98% en poids, par rapport au poids total de l'huile hydrocarbonée, ou
- des isoparaffines ayant 17 atomes de carbone et des isoparaffines ayant 18 atomes de carbone en une quantité combinée allant de 80 à 98% en poids, par rapport au poids total de l'huile hydrocarbonée.

L'huile hydrocarbonée du fluxant selon l'invention comprend de préférence une teneur en poids de composés naphténiques inférieure ou égale à 1%, préférentiellement inférieure ou égale à 0,5% et plus préférentiellement inférieure ou égale à 100 ppm.

Selon un autre mode de réalisation préféré, l'huile hydrocarbonée du fluxant selon l'invention comprend une teneur en poids d'isoparaffines allant de 90% à 100%, une teneur en poids de paraffines normales allant de 0 à 10% et une teneur en poids de naphtènes inférieure ou égale à 1%. Préférentiellement l'huile hydrocarbonée comprend une teneur en poids allant de 95% à 100% d'isoparaffines, de 0 à 5% de paraffines normales et une teneur en poids de naphtènes inférieure ou égale à 0,5%. Plus préférentiellement elle comprend une teneur en poids allant de 98% à 100% d'isoparaffines, de 0 à 2 % de paraffines normales et une teneur en poids de naphtènes inférieure ou égale à 100 ppm.

L'huile hydrocarbonée mise en œuvre dans le fluxant selon l'invention est avantageusement exempte de composés aromatiques. Par exempte, on entend une teneur en poids de composés aromatiques inférieure ou égale à 500 ppm, de préférence inférieure ou égale à 300 ppm, préférentiellement inférieure ou égale à 100 ppm, plus préférentiellement inférieure ou égale à 50 ppm et avantageusement inférieure ou égale à 20 ppm mesurée par exemple par spectrométrie UV.

La teneur en poids en isoparaffines, en n-paraffines, en naphtènes et/ou en aromatiques de l'huile hydrocarbonée peut être déterminée selon des méthodes bien connues de l'homme du métier. On peut citer à titre d'exemple non limitatif, une méthode par chromatographie en phase gazeuse.

Selon un autre mode de réalisation préféré, l'huile hydrocarbonée du fluxant selon l'invention comprend une teneur en poids d'isoparaffines allant de 90% à 100%, une teneur en poids de paraffines normales (n-paraffines) allant de 0 à 10%, une teneur en poids de naphtènes inférieure ou égale à 1% et une teneur en poids de composés aromatiques inférieure ou égale à 500 ppm. Préférentiellement l'huile hydrocarbonée comprend une teneur en poids allant de 95% à 100% d'isoparaffines, de 0 à 5% de paraffines normales, une teneur en poids de naphtènes inférieure ou égale à 0,5% et une teneur en poids de composés aromatiques inférieure ou égale à 300 ppm, de préférence inférieure à 100 ppm, préférentiellement inférieure à 50 ppm et avantageusement inférieure à 20 ppm. Préférentiellement aussi l'huile hydrocarbonée comprend une teneur en poids allant de 95 à 100% d'isoparaffines, de 0 à 5% de paraffines normales, une teneur en poids de naphtènes inférieure ou égale à 100 ppm et une teneur en poids de composés aromatiques inférieure ou égale à 100 ppm. Plus préférentiellement elle comprend une teneur en poids allant de 98% à 100% d'isoparaffines, de 0 à 2 % de paraffines normales, une teneur en poids de naphtènes inférieure ou égale à 100 ppm et une teneur en poids de composés aromatiques inférieure ou égale à 100 ppm.

L'huile hydrocarbonée mise en œuvre dans le fluxant selon l'invention a également de préférence une teneur en poids de composés soufrés extrêmement basse, typiquement inférieure ou égale à 5 ppm, préférentiellement inférieure ou égale à 3 ppm et plus préférentiellement inférieure ou égale à 0,5 ppm à un niveau trop bas pour être détectée grâce à des analyseurs de basse-teneur en soufre conventionnels.

L'huile hydrocarbonée mise en œuvre dans le fluxant selon l'invention a également de préférence un point éclair supérieur ou égal à 110°C, préférentiellement supérieur ou égal à 120°C et plus préférentiellement supérieur ou égal à 140°C selon la norme EN ISO 2719. Un point éclair élevé, typiquement supérieur à 110°C permet entre autre de pallier les problèmes de sécurité lors du stockage et du transport en évitant une inflammabilité trop sensible de l'huile hydrocarbonée.

L'huile hydrocarbonée a aussi de préférence une pression de vapeur à 20°C inférieure ou égale à 0,01kPa.

Selon un mode de réalisation, l'huile hydrocarbonée mise en œuvre dans le fluxant selon l'invention a également de préférence un point éclair supérieur ou égal à 110°C selon la norme EN ISO 2719 et une pression de vapeur à 20°C inférieure ou égale à 0,01kPa. Préférentiellement l'huile hydrocarbonée a un point éclair supérieur ou égal à 120°C et une pression de vapeur à 20°C inférieure ou égale à 0,01kPa. Et plus préférentiellement, elle a un point éclair supérieur ou égal à 130°C et une pression de vapeur à 20°C inférieure ou égale à 0,01kPa.

L'huile hydrocarbonée mise en œuvre dans le fluxant selon l'invention présente des températures d'ébullition, un point éclair et une pression de vapeur permettant de pallier les problèmes d'inflammabilité, d'odeur et de volatilité.

L'huile hydrocarbonée du fluxant selon l'invention a en outre de préférence une viscosité cinématique à 40°C inférieure ou égale à 5 cSt, préférentiellement inférieure ou égale à 4 cSt et plus préférentiellement inférieure ou égale à 3 cSt selon la norme EN ISO 3104.

### Procédé d'obtention de l'huile hydrocarbonée :

De telles compositions d'huiles hydrocarbonées peuvent être obtenues de la façon suivante. L'huile hydrocarbonée selon l'invention est une coupe hydrocarbonée qui est issue de la conversion de la biomasse.

Par issue de la conversion de la biomasse, on entend une coupe hydrocarbonée produite à partir de matières premières d'origine biologique.

De préférence, la coupe hydrocarbonée d'origine biologique est obtenue par un procédé comprenant des étapes d'hydrodésoxygénation (HDO) et d'isomérisation (ISO). L'étape d'hydrodésoxygénation (HDO) conduit à la décomposition des structures des esters biologiques ou des constituants triglycérides, à l'élimination des composés oxygénés, phosphorés et soufrés et à l'hydrogénation des liaisons oléfiniques. Le produit issu de la réaction d'hydrodésoxygénation est ensuite isomérisé. Une étape de fractionnement peut de préférence suivre les étapes d'hydrodésoxygénation et d'isomérisation. De manière avantageuse, les fractions d'intérêt sont ensuite soumises à des étapes d'hydrotraitement puis de distillation afin obtenir les spécifications de l'huile hydrocarbonée souhaitée selon l'invention.

Ce procédé HDO/ISO est mis en œuvre sur une charge biologique brute, encore appelée biomasse ou matière première d'origine biologique, sélectionnée dans le groupe consistant en des huiles végétales, des graisses animales, des huiles de poisson et leur mélange. Les matières premières d'origine biologique appropriées sont par exemple l'huile de colza, l'huile de canola, le talloil, l'huile de tournesol, l'huile de soja, l'huile de chanvre, l'huile d'olive, l'huile de lin, l'huile de moutarde, l'huile de palme, l'huile d'arachide, l'huile de ricin, l'huile de noix de coco, les graisses animales telles que le suif, les graisses alimentaires recyclées, les matières premières issues du génie génétique, et les matières premières biologiques produites à partir de microorganismes tels que les algues et les bactéries. Des produits de condensation, esters ou autres dérivés obtenus à partir de matériaux biologiques bruts peuvent également servir de matières premières.

De préférence, la matière première d'origine biologique est un ester ou un dérivé triglycéride. Ce matériaux est soumis tout d'abord à une étape d'hydrodésoxygénation (HDO) pour décomposer la structure des esters ou triglycérides constitutifs et éliminer les composés oxygénés, phosphorés et soufrés de manière concomitante à l'hydrogénation des liaisons oléfiniques. Cette étape d'hydrodésoxygénation (HDO) de la matière première d'origine biologique est suivie par une isomérisation du produit ainsi obtenu conduisant à la ramification de la chaîne hydrocarbonée et à une amélioration des propriétés de la paraffine à basses températures.

Durant l'étape HDO, l'hydrogène et la matière première d'origine biologique sont passés sur un lit catalytique d'hydrodésoxygénation de manière simultanée ou à contre-courant. Durant l'étape HDO, la pression et la température sont comprises entre 20 et 150 bars et entre 200 et 500°C respectivement. Des catalyseurs classiques et connus d'hydrodésoxygénation sont utilisés durant cette étape. Éventuellement, la matière première d'origine biologique peut être soumise à une pré-hydrogénation sous conditions douces pour éviter les réactions secondaires des doubles liaisons avant l'étape HDO. Après l'étape d'hydrodésoxygénation, le produit issu de la réaction est soumis à une étape d'isomérisation (ISO) où l'hydrogène et le produit, et éventuellement un mélange de n-paraffines, sont passés sur des lits catalytiques d'isomérisation de manière simultanée, dans le même sens ou à contre-courant. Lors de l'étape ISO, la pression et la température sont comprises entre 20 et 150 bars et entre 200 et 500°C respectivement. Des catalyseurs classiques et connus d'isomérisation sont utilisés durant cette étape.

Des procédés secondaires additionnels peuvent également être mis en œuvre (comme des mélanges intermédiaires, des piégeages ou autres procédés de la sorte).

Le produit issu des étapes HDO/ISO peut éventuellement être fractionné afin d'obtenir les coupes d'intérêt.

Divers procédés HDO/ISO sont décrits dans la littérature. La demande WO2014/033762 décrit un procédé comprenant une étape de pré-hydrogénation, une étape d'hydrodésoxygénation (HDO) et une étape d'isomérisation opérées à contre-courant. La demande de brevet EP1728844 décrit un procédé de production de composés hydrocarbonés à partir d'un mélange de composés d'origine végétale et animale. Ce procédé comprend une étape de prétraitement du mélange permettant d'enlever les contaminants, comme par exemple les sels de métaux alcalins, suivie d'une étape d'hydrodésoxygénation (HDO) et d'une étape d'isomérisation. La demande de brevet EP2084245 décrit un procédé de production d'un mélange hydrocarboné qui peut être utilisé comme gazole ou dans une composition de gazole par hydrodésoxygénation d'un mélange d'origine biologique contenant des esters d'acides gras éventuellement en mélange avec des acides gras libres, par exemple des huiles végétales comme l'huile de tournesol, l'huile de colza, l'huile de canola, l'huile de palme ou l'huile de pin, suivi d'une hydroisomérisation sur des catalyseurs spécifiques. La demande de brevet EP2368967 décrit un tel procédé et le produit obtenu par ce procédé. La demande WO2016/185046 décrit un procédé d'obtention d'une huile hydrocarbonée utilisée selon l'invention, dans lequel l'huile hydrocarbonée est obtenue par un procédé d'hydrogénation catalytique à une température de 80 à 180°C et à une pression de 50 à 160 bars d'une charge d'origine biologique désoxygénée et isomérisée.

Avantageusement, la matière première d'origine biologique contient moins de 15 ppm de soufre, de préférence moins de 8 ppm, préférentiellement moins de 5 ppm et plus préférentiellement moins de 1 ppm selon la norme EN ISO 20846. Idéalement la charge ne comprend pas de soufre en tant que matière première d'origine biosourcée.

Avant l'étape d'hydrotraitement, une étape de préfractionnement peut avoir lieu. Une coupe plus étroite en entrée d'unité d'hydrogénation permet d'obtenir une coupe étroite en sortie d'unité. En effet, les points d'ébullition de coupes préfractionnées sont compris entre 220 et 330 °C tandis que les coupes qui n'ont pas été préfractionnées ont typiquement des points d'ébullition comprise entre 150 et 360°C.

La charge désoxygénée et isomérisée issue du procédé HDO/ISO est ensuite hydrogénée.

L'hydrogène utilisé dans l'unité d'hydrogénation est typiquement de l'hydrogène hautement purifié. On entend par hautement purifié, de l'hydrogène d'une pureté par exemple supérieure à 99%, même si d'autres grades peuvent également être utilisés.

L'étape d'hydrogénation est effectuée grâce à des catalyseurs. Les catalyseurs d'hydrogénation types peuvent être soit massiques soit supportés et peuvent comprendre les métaux suivants : nickel, platine, palladium, rhénium, rhodium, tungstate de nickel, nickel-molybdène, molybdène, cobalt-molybdène. Les supports peuvent être de la silice, de l'alumine, de la silice-alumine ou des zéolithes.

Un catalyseur préféré est un catalyseur à base de nickel sur support d'alumine dont l'aire de surface spécifique varie entre 100 et 200 m²/g de catalyseur ou un catalyseur massique à base de nickel. Les conditions d'hydrogénation sont typiquement les suivantes :
- Pression : 50 à 160 bars, de préférence 80 à 150 bars et plus préférentiellement 90 à 120 bars ;
- Température : 80 à 180 °C, de préférence 120 à 160 °C et plus préférentiellement 150 à 160 °C ;
- Vitesse volumique horaire (VVH): 0,2 à 5 hr⁻¹, de préférence 0,4 à 3 hr⁻¹ et plus préférentiellement 0,5 à 0,8 hr⁻¹;
- Taux de traitement par l'hydrogène : adapté aux conditions mentionnées ci-dessus et pouvant aller jusqu'à 200 Nm³/tonnes de charge à traiter.

La température dans les réacteurs est typiquement comprise entre 150 et 160°C avec une pression d'environ 100 bars tandis que la vitesse volumique horaire est d'environ 0,6 hr⁻¹ avec un taux de traitement adapté en fonction de la qualité de la charge à traiter et des paramètres du premier réacteur d'hydrogénation.

L'hydrogénation peut avoir lieu dans un ou plusieurs réacteurs en série. Les réacteurs peuvent comprendre un ou plusieurs lits catalytiques. Les lits catalytiques sont généralement des lits catalytiques fixes.

Le procédé d'hydrogénation comprend de préférence deux ou trois réacteurs, de préférence trois réacteurs et est plus préférentiellement réalisé dans trois réacteurs en série.

Le premier réacteur permet le piégeage des composés soufrés et l'hydrogénation d'essentiellement tous les composés insaturés et jusqu'à environ 90 % des composés aromatiques. Le produit issu du premier réacteur ne contient substantiellement aucun composé soufré. Au second stade c'est-à-dire dans le second réacteur, l'hydrogénation des aromatiques se poursuit et jusqu'à 99 % des aromatiques sont de ce fait hydrogénés.

Le troisième stade dans le troisième réacteur est un stade de finition permettant d'obtenir des teneurs en aromatiques inférieures ou égales à 500 ppm, de préférence inférieures ou égales à 300 ppm, préférentiellement inférieures ou égales à 100 ppm, plus préférentiellement inférieures ou égales à 50 ppm, et idéalement inférieures ou égales à 20 ppm même dans le cas de produits à haut point d'ébullition par exemple supérieur à 300°C.

Il est possible d'utiliser un réacteur qui comporte deux ou trois lits catalytiques ou plus. Les catalyseurs peuvent être présents à des quantités variables ou essentiellement égales dans chaque réacteur ; pour trois réacteurs, les quantités en fonction du poids peuvent par exemple être de 0,05-0,5/0,10-0,70/0,25-0,85, de préférence 0,07-0,25/0,15-0,35/0,4-0,78 et plus préférentiellement de 0,10-0,20/0,20-0,32/0,48-0,70.

Il est également possible d'utiliser un ou deux réacteurs d'hydrogénation au lieu de trois.

Il est également possible que le premier réacteur soit composé de réacteurs jumeaux mis en œuvre de manière alternative. Ce mode d'opérabilité permet notamment un chargement et un déchargement facilités des catalyseurs : lorsque le premier réacteur comprend le catalyseur saturé en premier (substantiellement tout le soufre est piégé sur et/ou dans le catalyseur) il doit être changé souvent.

Un seul réacteur peut également être utilisé dans lequel deux, trois lits catalytiques ou plus sont installés.

Il peut être nécessaire d'insérer des boîtes de quench (au sens anglais « d'étouffement de la réaction ») dans le système de recycle ou entre les réacteurs pour refroidir les effluents d'un réacteur à un autre ou d'un lit catalytique à un autre afin de contrôler les températures et l'équilibre hydrothermique de chaque réaction. Selon un mode de réalisation préféré, il n'y a pas d'intermédiaires de refroidissement ou d'étouffement.

Selon un mode de réalisation, le produit issu du procédé et/ou les gaz séparés sont au moins en partie recyclé(s) dans le système d'alimentation des réacteurs d'hydrogénation. Cette dilution contribue à maintenir l'exothermicité de la réaction dans des limites contrôlées, en particulier au premier stade. Le recyclage permet en outre un échange de chaleur avant la réaction et aussi un meilleur contrôle de la température.

L'effluent de l'unité d'hydrogénation contient principalement le produit hydrogéné et de l'hydrogène. Des séparateurs flash sont utilisés pour séparer les effluents en phase gazeuse, principalement l'hydrogène résiduel, et en phase liquide, principalement les coupes hydrocarbonées hydrogénés. Le procédé peut être effectué en utilisant trois séparateurs flash, un à pression élevée, un à pression intermédiaire et un à basse pression très proche de la pression atmosphérique.

L'hydrogène gazeux qui est recueilli en haut des séparateurs flash peut être recyclé dans le système d'alimentation de l'unité d'hydrogénation ou à différents niveaux dans les unités d'hydrogénation entre les réacteurs.

Selon un mode de réalisation, le produit final est séparé à pression atmosphérique. Il alimente ensuite directement une unité de fractionnement sous vide. De préférence, le fractionnement se fera à une pression comprise entre 10 et 50 mbars et plus préférentiellement à environ 30 mbars.

Le fractionnement peut être effectué de façon à ce qu'il soit possible de retirer simultanément divers fluides hydrocarbonés de la colonne de fractionnement et à ce que leur température d'ébullition puisse être prédéterminée.

En adaptant la charge au travers de ses points d'ébullition initial et final, les réacteurs d'hydrogénation, les séparateurs et l'unité de fractionnement peuvent donc être directement connectés sans qu'il soit nécessaire d'utiliser des cuves intermédiaires. Cette intégration de l'hydrogénation et du fractionnement permet une intégration thermique optimisée associée à une réduction du nombre d'appareils et à une économie d'énergie.

L'huile hydrocarbonée mise en œuvre dans le fluxant selon l'invention est avantageusement une coupe hydrocarbonée ayant un intervalle de distillation ID (en °C) allant de 230°C à 340°C, de préférence de 235°C à 330°C et plus préférentiellement de 240°C à 325°C mesuré selon la norme ASTM D86. De préférence, la différence entre le point d'ébullition initial et le point d'ébullition final est inférieure ou égale à 80°C, préférentiellement inférieure ou égale à 70°C, plus préférentiellement inférieure ou égale à 60°C et avantageusement comprise entre 40 et 50°C. L'huile hydrocarbonée peut comprendre une ou plusieurs fractions d'intervalles de distillation compris dans les intervalles décrits ci-dessus.

Selon un mode de réalisation particulièrement préféré, l'huile hydrocarbonée mise en œuvre dans le fluxant selon l'invention est une coupe hydrocarbonée ayant un intervalle de distillation ID (en °C) allant de 240°C à 280°C mesuré selon la norme ASTM D86.

Avantageusement, l'huile hydrocarbonée mise en œuvre dans le fluxant de l'invention est totalement saturée. De préférence, les composants de l'huile hydrocarbonée sont choisis parmi les isoparaffines comprenant 12 à 30 atomes de carbone, préférentiellement 13 à 19 atomes de carbone et plus préférentiellement 14 à 18 atomes de carbones.

Le fluxant selon l'invention comprend avantageusement une teneur en poids en isohexadécane inférieure ou égale à 50%.

L'huile hydrocarbonée du fluxant selon l'invention est idéalement issue du traitement de matières premières d'origine biologique. Le terme de « bio-carbone » indique que le carbone est d'origine naturelle et vient d'un biomatériau, comme indiqué ci-après. La teneur en bio-carbone et la teneur en biomatériau sont des expressions indiquant la même valeur.

L'huile hydrocarbonée mise en œuvre dans l'invention est obtenue à partir de matière première d'origine naturelle. Le carbone d'un biomatériau est issu de la photosynthèse de plantes et donc de CO₂ atmosphérique. La dégradation (par dégradation, il faut comprendre également combustion/incinération en fin de vie du matériau) de ces matériaux CO₂ ne contribue donc pas au réchauffement puisqu'il n'y a pas d'augmentation de carbone émis dans l'atmosphère. L'évaluation environnementale du CO₂ des biomatériaux est donc infiniment meilleure et contribue à réduire l'empreinte carbone des produits obtenus (seule l'énergie pour la fabrication est à prendre en compte). Au contraire, un matériau fossile étant également dégradé en CO₂ va contribuer à l'augmentation du CO₂ et donc au réchauffement climatique. L'huile hydrocarbonée définie dans la présente invention aura donc une empreinte carbone qui sera meilleure qu'une huile hydrocarbonée obtenue à partir de matériaux d'origine fossile.

Un matériau d'origine renouvelable ou biomatériau est un matériau organique dans lequel le carbone est issu du CO₂ fixé récemment (sur une échelle humaine) par photosynthèse à partir de l'atmosphère. Un biomatériau (Carbone 100% d'origine naturelle) présente un rapport isotopique ¹⁴C /¹²C supérieur à 10⁻¹², typiquement environ 1,2 x 10¹², tandis qu'un matériau fossile a un rapport nul. En effet, le ¹⁴C isotopique est formé dans l'atmosphère et est alors intégré par photosynthèse, selon une échelle de temps de quelques dizaines d'années au maximum. La demi-vie du ¹⁴C est 5730 années. Ainsi, les matériaux issus de la photosynthèse, à savoir les plantes d'une manière générale, ont nécessairement un contenu maximum en isotope ¹⁴C.

La détermination de la teneur en biomatériau ou en bio-carbone est donnée conformément aux normes ASTM D 6866-12, la méthode B (ASTM D 6866-06) et ASTM D 7026 (ASTM D 7026-04). L'huile hydrocarbonée du fluxant selon l'invention présente une teneur en biomatériau d'au moins 90%. Cette teneur est avantageusement plus élevée, en particulier supérieure ou égale à 95%, préférablement supérieure ou égale à 98 % et avantageusement égale à 100%.

En plus d'une teneur particulièrement élevée en biomatériau, l'huile hydrocarbonée du fluxant selon l'invention possède une biodégradabilité particulièrement bonne. La biodégradation d'un produit chimique organique se réfère à la réduction de la complexité des composés chimiques grâce à l'activité métabolique de micro-organismes. Dans des conditions aérobies, les micro-organismes transforment les substances organiques en dioxyde de carbone, eau et biomasse. La méthode OCDE 306, est utilisée pour l'évaluation de la biodégradabilité des substances individuelles dans l'eau de mer. La méthode OCDE 306 peut être mise en œuvre selon une méthode d'erlenmeyer, soit de la bouteille fermée, et les seuls microorganismes ajoutés sont les microorganismes dans l'eau de mer testée à laquelle la substance testée est ajoutée. Selon cette méthode de la bouteille fermée, l'huile hydrocarbonée a généralement une biodégradabilité à 28 jours d'au moins 60%, de préférence d'au moins 70%, plus préférablement d'au moins 75% et avantageusement d'au moins 80%.

La méthode OCDE 306 est la suivante :
La méthode de la bouteille fermée consiste à dissoudre une quantité prédéterminée de la substance à tester dans un milieu de contrôle à une concentration traditionnellement de 2-10 mg/L, une ou plusieurs concentrations étant éventuellement utilisées. La solution est maintenue dans une bouteille fermée remplie à l'abri de la lumière à une température constante dans la gamme 15-20°C. La dégradation est suivie par analyse de l'oxygène sur une période de 28 jours. 24 bouteilles sont utilisées (8 pour la substance à tester, 8 pour le composé de référence et 8 pour les nutriments). Toutes les analyses sont effectuées sur plusieurs bouteilles. Au moins 4 déterminations d'oxygène dissous sont effectuées (jour 0, 5, 15 et 20) en utilisant une méthode chimique ou électrochimique.

### Composé(s) d'origine végétale ou animale :

Le fluxant selon l'invention peut comprendre un ou plusieurs composés d'origine végétale ou animale choisi parmi les acides gras en C₆ à C₂₄ sous forme acide, ester ou amide, de préférence sous forme acide ou ester.

Le ou les composés d'origine végétale ou animale représentent de 1 à 50% en poids, de préférence de 5 à 45% en poids, préférentiellement de 10 à 40% en poids, plus préférentiellement de 15 à 35% en poids, encore plus préférentiellement de 15 à 30% en poids, du poids total du fluxant.

Dans une variante préférée de l'invention, on entend par ester ou amide d'acides gras les produits définis comme suit :
- Un ester d'acide gras est le produit de réaction entre au moins un acide gras et au moins un alcool, cet alcool pouvant être un mono-alcool, linéaire ou ramifié, comprenant de 1 à 5 atomes de carbones, ou un polyol, linéaire ou ramifié, comprenant de 2 à 5 groupements hydroxyles de préférence un triméthylolpropane, un érythritol, un pentaérythritol, un glycol, et/ou un glycérol. On peut ainsi obtenir des monoesters, des diesters, des triesters, des tétraesters ou des pentaesters. Sont inclus dans cette définition, les huiles végétales elles-mêmes et leurs produits de trans-estérification.
- Un amide d'acide gras est le produit de réaction entre au moins un acide gras et au moins une amine primaire, secondaire ou tertiaire ou des polyamines comprenant de 2 à 6 groupements aminés. On ne sortirait pas du cadre de l'invention s'il s'agissait de carboxylates d'amines.

Selon une variante de l'invention, le composé d'origine animale ou végétale présente une perte de masse PM₂₀₀ (en % en poids à 200°C) lors d'une analyse thermogravimétrique sous air telle que PM₂₀₀ ≤ 25 %, de préférence PM₂₀₀ ≤ 10 % et plus préférentiellement PM₂₀₀ ≤ 3 %. On préfère la mise en œuvre d'un composé d'origine végétale ou animale dont l'indice d'iode est suffisamment élevé pour assurer une bonne montée en consistance du bitume fluxé. De la sorte, contrairement aux fluxants utilisés précédemment, la coupe d'origine végétale ou animale selon l'invention s'évapore peu lors de la mise en œuvre.

Parmi les composés d'origine végétale, on choisira les acides, esters ou amides des huiles de pin (tall oil en anglais), de colza, de tournesol, de ricin, d'arachide, de lin, de coprah, d'olive, de palme, de coton, de mais, de suif, de saindoux, de palmiste, de soja, de courge, de pépin de raisin, d'argan, de jojoba, de sésame, de noix, de noisette, de bois de chine, de riz ainsi que les huiles de même type issues d'espèces hybrides ou génétiquement modifiées.

Parmi les composés d'origine animale, on peut citer les acides, esters et amides de graisses d'animaux marins, poissons ou mammifères marins et les graisses d'animaux terrestres telles que les graisses de cheval, de bœuf, de porc.

On préfère les acides gras d'huile de pin (ou tall oil fatty acids en anglais ou TOFA), contenant de 0,5 à 10 % en poids d'acide résinique et ses dérivés ester à base de méthanol, d'éthanol, de glycol et de glycérol.

On préfère aussi les triglycérides et autres esters d'huile de soja et de colza, y compris de leurs hybrides ou espèces génétiquement modifiées.

Le composé d'origine végétale ou animale utilisé dans le fluxant selon l'invention peut aussi être choisi parmi les esters méthyliques d'huile végétale (EMHV).

Ainsi, selon un mode de réalisation particulier, le composé d'origine végétale ou animal mis en œuvre dans le fluxant selon l'invention est choisi parmi les esters méthyliques d'huile végétale (EMHV), les acides gras d'huile de pin (ou tall oil fatty acids en anglais ou TOFA), et leurs mélanges.

Selon un mode de réalisation de l'invention, les composés saturés ou insaturés comportant 18 atomes de carbone représentent au moins 50% en poids, de préférence au moins 60% en poids, du poids total des composés d'origine végétale ou animale mis en œuvre dans le fluxant selon l'invention.

Selon une variante préférée, les composés insaturés comportant 18 atomes de carbone représentent au moins 50% en poids, de préférence au moins 60% en poids, du poids total des composés d'origine végétale ou animale mis en œuvre dans le fluxant selon l'invention.

Selon une variante préférée, les esters linoléiques, les acides linoléiques, les esters linoléniques et les acides linoléniques représentent au moins 50% en poids, de préférence au moins 60% en poids, du poids total des composés d'origine végétale ou animale mis en œuvre dans le fluxant selon l'invention.

En effet, en combinaison avec l'huile hydrocarbonée ces produits présentent une bonne synergie notamment en termes de volatilité et de point éclair pour le fluxant ; de pouvoir solvant pour la composition bitumineuse ; d'adhésion aux granulats, de consistance à l'usage et d'émission de fumées à l'application pour le liant bitumineux.

Selon un mode de réalisation de l'invention, le fluxant présente un ratio massique huile hydrocarbonée/composé(s) d'origine végétale ou animale allant de 55/45 à 95/5, de préférence allant de 60/40 à 90/10, préférentiellement de 70/30 à 90/10 et plus préférentiellement de 75/25 à 85/15.

Selon un mode de réalisation de l'invention, le fluxant selon la présente invention comprend, de préférence :
- de 55 à 95% en poids, de préférence de 60 à 90% en poids, préférentiellement de 70 à 90% en poids, plus préférentiellement de 75 à 85% en poids, d'huile hydrocarbonée, et
- de 5 à 45% en poids, de préférence de 10 à 40% en poids, préférentiellement de 10 à 30% en poids, plus préférentiellement de 15 à 25% en poids, de composé(s) d'origine végétale ou animale,
par rapport au poids total du fluxant.

Pour satisfaire aux normes de sécurité et pour permettre aux produits finis bitumineux de répondre également à ces normes, il est particulièrement avantageux que le fluxant selon l'invention ait un point éclair PC_{F} supérieur ou égal à 100°C, de préférence supérieur ou égal à 150°C et plus préférentiellement encore supérieur ou égal à 200°C.

Le fluxant selon l'invention est obtenu par simple mélange de l'huile hydrocarbonée et du composé d'origine végétale ou animale, de préférence à température ambiante.

L'invention concerne également l'utilisation d'une composition comprenant au moins 50% en poids d'au moins une huile hydrocarbonée telle que définie ci-dessus en tant que fluxant pour composition bitumineuse. Ladite composition utilisée en tant que fluxant peut éventuellement comprendre en outre au moins 1% en poids d'au moins un composé d'origine végétale ou animale choisi parmi les acides gras en C₆ à C₂₄ sous forme acide, ester ou amide.

L'huile hydrocarbonée et, le cas échéant, le composé d'origine végétale ou animale, mis(e) en œuvre dans la composition utilisée en tant que fluxant, peu(ven)t présenter une ou plusieurs des caractéristiques décrites ci-dessus dans le cadre du fluxant selon l'invention.

Les compositions bitumineuses mises en œuvre dans le cadre de l'utilisation selon l'invention comprennent typiquement au moins un bitume et éventuellement au moins un polymère. Le bitume et, le cas échéant, le polymère utilisé(s) peu(ven)t être tel(s) que défini(s) dans la présente invention.

Ces compositions bitumineuses présentent généralement une très bonne adhésivité avec les granulats auxquels elles sont destinées à être mélangées pour les applications revêtements routiers.

### Composition bitumineuse :

Ainsi, l'invention concerne également une composition bitumineuse comprenant au moins un bitume et au moins un fluxant comprenant :
- de 50% à 99% en poids d'au moins une huile hydrocarbonée qui comprend une teneur en poids d'isoparaffines allant de 90 à 100%, une teneur en poids de paraffines normales allant de 0 à 10% et une teneur en carbone d'origine biologique supérieure ou égale à 90 % par rapport au poids total de l'huile hydrocarbonée, et
- de 1% à 50% en poids d'au moins un composé d'origine végétale ou animale choisi parmi les acides gras en C₆ à C₂₄ sous forme acide, ester ou amide,
par rapport au poids total du fluxant.

Le fluxant de la composition bitumineuse peut présenter une ou plusieurs des caractéristiques détaillées ci-dessus pour le fluxant selon l'invention.

De préférence, le fluxant mis en œuvre dans la composition bitumineuse selon l'invention représente de 0,5 à 50% en poids, préférentiellement de 1 à 40% en poids, plus préférentiellement de 1 à 20% en poids, du poids total de la composition bitumineuse selon l'invention.

Parmi les compositions bitumineuses, on peut citer notamment les compositions comprenant des bitumes purs, des bitumes fluidifiés, des bitumes polymères, des bitumes fluxés et des bitumes oxydés ainsi que des mélanges de ces bitumes.

Plus spécifiquement, les compositions bitumineuses peuvent être sous forme anhydre, tel que les enduits superficiels ou sous forme d'émulsions.

De préférence, le fluxant mis en œuvre dans la composition bitumineuse sous forme d'émulsion selon l'invention représente de 0,5 à 5% en poids du poids total de la composition bitumineuse.

De préférence, le fluxant mis en œuvre dans la composition bitumineuse sous forme anhydre selon l'invention représente de 7 à 20% en poids, du poids total de la composition bitumineuse.

Par « bitume », on entend toutes compositions bitumineuses constituées d'une ou de plusieurs bases bitumes et comprenant éventuellement un ou plusieurs additifs chimiques, lesdites compositions étant destinées à une application routière.

Parmi les bases bitumes utilisables selon l'invention, on peut citer tout d'abord les bitumes d'origine naturelle, ceux contenus dans des gisements de bitume naturel, d'asphalte naturel ou les sables bitumineux et les bitumes provenant du raffinage du pétrole brut. Les bases bitumes selon l'invention sont avantageusement choisies parmi les bases bitumes provenant du raffinage du pétrole brut. Les bases bitumes peuvent être choisies parmi les bases bitumes ou mélanges de bases bitumes provenant du raffinage du pétrole brut, en particulier des bases bitumes contenant des asphaltènes ou des brais. Les bases bitumes peuvent être obtenues par des procédés conventionnels de fabrication des bases bitumes en raffinerie, en particulier par distillation directe et/ou distillation sous vide du pétrole. Ces bases bitumes peuvent être éventuellement viscoréduites et/ou désasphaltées et/ou rectifiées à l'air. Il est courant de procéder à la distillation sous vide des résidus atmosphériques provenant de la distillation atmosphérique de pétrole brut. Ce procédé de fabrication correspond, par conséquent, à la succession d'une distillation atmosphérique et d'une distillation sous vide, la charge alimentant la distillation sous vide correspondant aux résidus atmosphériques. Ces résidus sous vide issus de la tour de distillation sous vide peuvent être également utilisés comme bitumes. Il est également courant d'injecter de l'air dans une charge composée habituellement de distillats et de produits lourds provenant de la distillation sous vide de résidus atmosphériques provenant de la distillation du pétrole. Ce procédé permet d'obtenir une base soufflée, ou semi-soufflée ou oxydée ou rectifiée à l'air ou rectifiée partiellement à l'air.

Les différentes bases bitumes obtenues par les procédés de raffinage peuvent être combinées entre elles pour obtenir le meilleur compromis technique. La base bitume peut aussi être une base bitume de recyclage. Les bases bitumes peuvent être des bases bitumes de grade dur ou de grade mou.

Selon l'invention, pour les procédés conventionnels de fabrication des bases bitumes, on opère à des températures de fabrication comprises entre 100°C et 200°C, de préférence entre 140°C et 200°C, plus préférentiellement entre 140°C et 170°C, et sous agitation pendant une durée d'au moins 10 minutes, de préférence comprise entre 30 minutes et 10 heures, plus préférentiellement entre 1 heure et 6 heures. On entend par température de fabrication, la température de chauffage de la ou des bases bitumes avant mélange ainsi que la température de mélange. La température et la durée du chauffage varient selon la quantité de bitume utilisée et sont définies par la norme NF EN 12594.

Selon l'invention, les bitumes soufflés peuvent être fabriqués dans une unité de soufflage, en faisant passer un flux d'air et/ou d'oxygène à travers une base bitumineuse de départ. Cette opération peut être menée en présence d'un catalyseur d'oxydation, par exemple de l'acide phosphorique. Généralement, le soufflage est réalisé à des températures élevées, de l'ordre de 200 à 300°C, pendant des durées relativement longues typiquement comprises entre 30 minutes et 2 heures, en continu ou par lots. La durée et la température de soufflage sont ajustées en fonction des propriétés visées pour le bitume soufflé et en fonction de la qualité du bitume de départ.

Préférentiellement, la base bitume mise en œuvre pour fabriquer des granules présente une pénétrabilité à l'aiguille mesurée à 25°C selon la norme EN 1426 de 5 à 330 1/10 mm, de préférence de 10 à 220 1/10 mm.

De manière bien connue, la mesure dite de « pénétrabilité à l'aiguille » est réalisée au moyen d'un test normalisé NF EN 1426 à 25°C (P₂₅). Cette caractéristique de pénétrabilité est exprimée en dixièmes de millimètre (dmm ou 1/10 mm). La pénétrabilité à l'aiguille, mesurée à 25°C, selon le test normalisé NF EN 1426, représente la mesure de la pénétration dans un échantillon de bitume, au bout d'un temps de 5 secondes, d'une aiguille dont le poids avec son support est de 100 g. La norme NF EN 1426 remplace la norme homologuée NF T 66-004 de décembre 1986 avec effet au 20 décembre 1999 (décision du Directeur Général d'AFNOR en date du 20 novembre 1999).

Il est en outre connu de modifier le bitume (ou le mélange de bitumes) en y mélangeant au moins un composé pouvant être de type (co)polymère, en vue d'améliorer certaines de ses performances mécaniques et thermiques. Les bitumes purs et les bitumes polymères sont employés aussi bien dans le domaine des applications routières (par exemples, construction et entretien des chaussées) que dans le domaine des applications industrielles (par exemples, étanchéité de toitures et de digues, dalles de moquette).

Dans un mode de réalisation, le bitume mis en œuvre dans l'invention est une composition bitume-polymère.

Dans un mode de réalisation, le polymère compris dans la composition bitume-polymère selon l'invention est typiquement un élastomère pour bitume connu, de préférence choisi parmi les copolymères SB (copolymère à blocs du styrène et du butadiène), SBS (copolymère à blocs styrène-butadiène-styrène), SIS (styrène-isoprène-styrène), SBS* (copolymère à blocs styrène-butadiène-styrène en étoile), SBR (styrène-b-butadiène-rubber), EPDM (éthylène propylène diène modifié), polychloroprène, polynorbornène, caoutchouc naturel, polybutène, polyisobutylène, SEBS (copolymère du styrène, de l'éthylène, du butylène et du styrène).

Dans un autre mode de réalisation, le polymère compris dans la composition bitume-polymère selon l'invention est un élastomère thermoréticulable pour bitume connu, de préférence choisi parmi les élastomères réalisés à partir de monomères styrène et de monomères butadiène permettant une réticulation sans agent réticulant tels que décrits dans les documents WO2007/058994 et WO2008/137394 et également par la demanderesse dans la demande WO2011/013073. Les enseignements décrits dans les demandes WO2007/058994, WO2008/137394 et WO2011/013073 sont incorporés par référence dans la présente description, notamment les définitions des polymères décrits dans ces trois demandes sont intégrées par référence dans la présente description.

Selon un mode de réalisation de l'invention, la composition bitumineuse comprend :
- de 50 à 99% en poids, de préférence de 60 à 95% en poids, préférentiellement de 70 à 90% en poids, de bitume,
- de 0,5 à 30% en poids, de préférence de 1 à 20% en poids, de fluxant selon l'invention, et
- optionnellement de 0,5 à 20% en poids, de préférence de 1 à 10% en poids, préférentiellement de 1 à 6% en poids, d'au moins un polymère,
par rapport au poids total de la composition bitumineuse.

D'autres additifs peuvent être ajoutés afin de modifier les caractéristiques mécaniques d'un bitume. Il s'agit par exemple d'agents de vulcanisation et/ou d'agents de réticulation susceptibles de réagir avec un polymère, lorsqu'il s'agit d'un élastomère et/ou d'un plastomère, pouvant être fonctionnalisés et/ou pouvant comporter des sites réactifs.

Parmi les agents de vulcanisation, on peut citer ceux à base de soufre, utilisés pour réticuler un élastomère à des teneurs en poids de 0,01% à 30% par rapport au poids d'élastomère.

Parmi les agents de réticulation, on peut citer les agents de réticulation cationiques tels que les mono ou poly acides, ou anhydrides carboxyliques, les esters d'acides carboxyliques, les acides sulfonique, sulfurique, phosphorique, voire les chlorures d'acides, les phénols, à des teneurs en poids de 0,01% à 30% par rapport au poids du polymère. Ces agents sont susceptibles de réagir avec l'élastomère et/ou le plastomère fonctionnalisé. Ils peuvent être utilisés en complément ou en remplacement des agents de vulcanisation.

Parmi les additifs susceptibles d'être utilisés, on citera les additifs d'adhésivité (ou dopes d'adhésivité) connus de l'homme du métier tels que des amines ou polyamines, les additifs chimiques tels que ceux décrits dans la demande WO 2008/107551 et incorporés par référence dans la présente demande. On citera également les siccatifs susceptibles d'assurer la montée en cohésion dans le temps du liant fluxé.

La composition bitumineuse selon l'invention peut servir de liant dans un matériau routier à base de bitume et de granulats routiers.

La préparation des compositions bitumineuses est réalisée selon des procédés et à l'aide de matériels connus de l'homme du métier. La principale différence réside dans le fait que l'on ajoute un fluxant particulier, le fluxant selon l'invention, aux composants habituels. Cela permet de conférer des caractéristiques, notamment mécaniques, particulières aux compositions ainsi préparées et aux matériaux que l'on peut obtenir à partir de ces compositions.

### Liant bitumineux

L'invention a enfin pour objet un liant bitumineux obtenu à partir d'une composition bitumineuse selon l'invention et comprenant en outre des granulats et/ou des charges.

De nombreux types de granulats sont envisageables. Ils sont préférentiellement sélectionnés parmi les granulats minéraux, par exemple les granulats routiers répondant aux normes pertinentes : NF EN 13043 "Granulats pour mélanges hydrocarbonés et pour enduits superficiels utilisés dans la construction des chaussées, aérodromes et autres zones de circulation" en Europe, ASTM C33 "Standard specification for concrete aggregates" aux Etats-Unis d'Amérique.

Les granulats peuvent être des granulats minéraux et/ou synthétiques, notamment, des fraisats de recyclage, de dimensions supérieures à 2 mm, de préférence comprises entre 2 mm et 20 mm.

Les charges peuvent être des charges minérales et/ou des charges synthétiques, de préférence choisies parmi des fines, du sable, des gravillons et des fraisats de recyclage.

Ainsi, un aspect de l'invention concerne les différents bitumes routiers qui comportent une composition bitumineuse définie ci-dessus. Tout particulièrement, l'invention concerne des éléments constitués d'au moins un revêtement comprenant un fluxant ou une composition bitumineuse selon l'invention.

Ainsi, l'invention concerne par exemple les enduits superficiels, les enrobés à froid, les enrobés coulés à froid et les asphaltes.

S'agissant des applications routières, l'invention vise notamment des enrobés bitumineux comme matériaux pour la construction et l'entretien des corps de chaussée et de leur revêtement, ainsi que pour la réalisation de tous travaux de voiries.

Par enrobé bitumineux, on entend, un mélange d'un liant bitumineux avec des granulats et éventuellement des charges minérales et/ou synthétiques.

S'agissant des applications routières, l'invention vise également des asphaltes comme matériaux pour fabriquer et recouvrir des trottoirs.

Par asphalte, on entend un mélange de liant bitumineux avec des charges minérales et/ou synthétiques.

Un asphalte comprend un liant bitumineux tel que décrit ci-dessus et des charges minérales telles que des fines, du sable ou des gravillons et/ou des charges synthétiques. Les charges minérales sont constituées de fines (particules de dimensions inférieures à 0,063 mm), de sable (particules de dimensions comprises entre 0,063 mm et 2 mm) et éventuellement de gravillons (particules de dimensions supérieures à 2 mm, de préférence comprises entre 2 mm et 4 mm). Les asphaltes présentent 100% de compacité et sont principalement utilisés pour fabriquer et recouvrir des trottoirs, alors que les enrobés possèdent une compacité inférieure à 100% et sont utilisés pour fabriquer des routes. Contrairement aux enrobés, les asphaltes ne sont pas compactés au rouleau lors de leur mise en place.

### EXEMPLES

Dans la suite de la présente description, des exemples sont donnés à titre illustratif de la présente invention et ne visent en aucun cas à en limiter la portée.

### Fluxants :

Les fluxants testés sont les suivants :
- Fluxant A comparatif : fluxant obtenu à partir d'esters méthyliques d'huile végétale (EMHV₁) comprenant 100% en poids d'esters obtenus à partir d'acides insaturés présentant de 16 à 18 atomes de carbone.
- Fluxant B comparatif : fluxant comprenant du TOFA (acide gras de type tall oil) et une huile hydrocarbonée HC1 dans un rapport massique 6,5/1.
- Fluxant 1 selon l'invention : fluxant comprenant une huile hydrocarbonée HC2 et un ester méthylique d'acide gras (EMHV₂) dans un rapport massique 79/21.
- Fluxant 2 selon l'invention : fluxant comprenant une huile hydrocarbonée HC2 et du TOFA dans un rapport massique 81/19.
- Fluxant 3 selon l'invention : fluxant comprenant une huile hydrocarbonée HC2 et un ester méthylique d'acide gras (EMHV₂) dans un rapport massique 81/19.

Le tableau 1 ci-dessous donne les caractéristiques physico-chimiques des deux huiles hydrocarbonées testées HC1 et HC2.

**Tableau 1 : description des huiles HC1 et HC2**

| Caractéristiques | HC1 | HC2 |
|---|---|---|
| Aromatiques (ppm) | <300 | <20 |
| Soufre (ppm) | < 1 | 0,1 |
| % iso paraffines (w/w) | 60 | 98,9 |
| % n-paraffines (w/w) | 16 | 1,1 |
| % naphténiques (w/w) | 24 | 0 |
| C13 (iso) | 0 | 0,66 |
| C14 (iso) | 0,01 | 4,15 |
| C15 (iso) | 0,22 | 48,35 |
| C16 (iso) | 1,86 | 42,80 |
| C17 (iso) | 6,13 | 2,52 |
| C18 (iso) | 13,18 | 0,38 |
| C19 (iso) | 21,29 | 0 |
| C20 (iso) | 25,04 | 0 |
| C21 (iso) | 17,65 | 0 |
| C22 (iso) | 9,83 | 0 |
| C23 (iso) | 3,18 | 0 |
| C24 (iso) | 1,15 | 0 |
| C25 (iso) | 0,37 | 0 |
| C26 (iso) | 0,08 | 0 |
| Quantité de carbones d'origine biologique (%) | 0 | > 98 |
| Point d'ébullition initial (°C) | 305 | 247,0 |
| Point ébullition 5% (°C) | 314 | 255,7 |
| Point ébullition 50% (°C) | 322 | 258,9 |
| Point ébullition 95% (°C) | 343 | 266,8 |
| Point d'ébullition final (°C) | 345 | 269,0 |
| Biodégradabilité OECD (28 jours) (%) | ND⁽¹⁾ | 80 |
| Indice de réfraction à 20°C | 1,4510 | 1,4336 |
| densité à 15°C (kg/m3) | 805-825 | 776,4 |
| Point éclair (°C) | 158 | 115 |
| Viscosité Cinématique à 40°C (cSt) | 5,9 | 2,49 |
| Pression de vapeur à 20°C (kPa) | <0,01 | <0,01 |
| Point d'Aniline (°C) | 100 | 93,2 |

| | | |
|---|---|---|
| ⁽¹⁾ND : non déterminé | | |

Les normes suivantes ont été utilisées pour mesurer les propriétés ci-dessus :
- point éclair : EN ISO 2719
- densité à 15°C : EN ISO 1185
- viscosité à 40°C : EN ISO 3104
- point d'aniline : EN ISO 2977
- point d'ébullition : ASTM D86
- biodégradabilité : méthode OCDE 306
- indice de réfraction à 20°C : ASTM D 1218
- pression de vapeur : calculée selon des méthodes bien connues de l'homme du métier

Le tableau 2 décrit la composition de l'ester méthylique d'huile végétale EMHV₂.

**Tableau 2 : description de la composition de EMHV₂**

| composés | Teneur (% en poids par rapport au poids total de EMHV₂) |
|---|---|
| C14 | 0,1% |
| C16 | 4,4% |
| C16:1 | 0,2% |
| C18 | 1,5% |
| C18:1 | 62,3% |
| C18:2 | 19,3% |
| C18:3 | 9,5% |
| C20 | 0,5% |
| C20:1 | 1,4% |
| C22 | 0,3% |
| C22:1 | 0,5% |

### 1. Essai dans un bitume pur de classe 70/100

Le bitume pur testé présente une pénétrabilité à 25°C de 75 dixièmes de millimètre. Différents fluxants ont été ajoutés dans ce bitume pur en différentes proportions, allant de 8% à 11% en poids par rapport au poids total du bitume pur fluxé.

La pseudo-viscosité STV mesurée à 40°C, selon la norme NF EN 12846-2 a été évaluée pour chaque composition de bitume additivée avec un fluxant. La mesure de la pseudo-viscosité STV représente le temps d'écoulement (exprimé en secondes) de 50 cm³ de la composition de bitume additivée avec un fluxant à travers un orifice de 10 mm de diamètre. Les mesures de la pseudo-viscosité STV sont regroupées dans le tableau 3.

**Tableau 3 : Viscosité STV mesurée en fonction du type de fluxant et de la teneur en fluxant dans la composition bitumineuse**

| Fluxants testés | Teneur en fluxant (% en poids) | Viscosité STV 40°C, 10 mm (en secondes) |
|---|---|---|
| Fluxant A | 8,0 | 267 |
| | 9,5 | 149 |
| | 11,0 | 99 |
| Fluxant B | 8,0 | 584 |
| | 9,5 | 401 |
| | 11,0 | 285 |
| Fluxant 1 | 8,0 | 278 |
| | 9,5 | 150 |
| | 11,0 | 100 |
| Fluxant 2 | 8,0 | 320 |
| | 9,5 | 181 |
| | 11,0 | 119 |
| Fluxant 3 | 8,0 | 284 |
| | 9,5 | 155 |
| | 11,0 | 105 |

Les mesures de la viscosité STV 40°C regroupées dans le tableau 3 montrent que le bitume additivé avec le fluxant B s'écoule moins rapidement que les bitumes additivés respectivement avec les fluxants 1, 2 et 3 selon l'invention. Par conséquent, le bitume additivé avec le fluxant B est plus visqueux que le bitume additivé respectivement avec les fluxants selon l'invention.

Dès lors, on constate que les fluxants selon l'invention ont un meilleur pouvoir fluxant que le fluxant comparatif B.

A partir des mesures de la pseudo-viscosité STV regroupées dans le tableau 3, pour chaque fluxant, une courbe de fluxage représentant la teneur en fluxant (% en poids) en fonction de la pseudo-viscosité STV 40°C, 10 mm (secondes) a pu être tracée. A partir de ces courbes, les teneurs en fluxant nécessaires pour obtenir une pseudo-viscosité STV 40°C, 10 mm de 250 secondes ont été déterminées. En effet, cette viscosité correspond à une viscosité moyenne pour un bitume pur fluxé. Le tableau 4 rassemble les compositions bitumineuses à iso pseudo-viscosité STV 40°C de 250 secondes et comprenant respectivement des teneurs en fluxants A et B hors de l'invention et des teneurs en fluxants 1, 2 et 3 selon l'invention.

Ces compositions bitumineuses à iso pseudo-viscosité STV 40°C de 250 secondes ont été soumises au test de liant stabilisé selon la norme EN 13074-1 et la norme EN 13074-2, puis leurs pénétrabilités selon la norme NF EN 1426 mesurées à 25°C et exprimées en dixième de millimètre ainsi que leurs Températures Bille Anneau (TBA) selon la norme NF EN 1427 et exprimées en degré ont été mesurées et regroupées dans le tableau 4.

**Tableau 4 : Compositions de bitume fluxées**

| | Fluxant A | Fluxant B | Fluxant 1 | Fluxant 2 | Fluxant 3 |
|---|---|---|---|---|---|
| Teneur en fluxant (% en poids) | 8,1 | 11,3 | 8,3 | 8,8 | 8,3 |
| Pénétrabilité à 25°C (0,1 mm) | > 330 | > 330 | 265 | 261 | 260 |
| TBA (en °C) | 25,6 | 25,8 | 35,0 | 34,8 | 33,8 |

Au regard de ces résultats, on peut noter que les compositions bitumineuses comprenant respectivement le fluxant A et le fluxant B comprenant des quantités majoritaires d'esters présentent une pénétrabilité à 25°C supérieure à 330 dmm, au-delà des exigences de pénétrabilité de la norme NF EN 15322 pour les bitumes (purs) fluxés ainsi qu'une TBA inférieure à 30°C, en-dessous des exigences de TBA de la norme NF EN 15322 pour les bitumes (purs) fluxés.

En particulier, on peut noter que le fluxant A comparatif présente un pouvoir solvant satisfaisant mais ne permet pas d'obtenir une pénétrabilité et une TBA satisfaisantes.

Au contraire, les compositions bitumineuses comprenant respectivement les fluxants 1, 2 et 3 selon l'invention présentent une pénétrabilité à 25°C inférieure à 330 dmm, plus particulièrement inférieure à 280 dmm, remplissant les exigences de pénétrabilité des bitumes fluxés selon la norme NF EN 15322, ainsi qu'une TBA supérieure à 30°C, plus particulièrement supérieure ou égale à 35 °C, remplissant les exigences de TBA des bitumes fluxés selon la norme NF EN 15322.

### 2. Essai dans un bitume/polymère

D'autres essais ont été effectués avec un autre bitume, cet autre bitume est un bitume/polymère.

Les compositions bitumineuses (fluxées) testées présentent la composition générale suivante :
- 89,0% en poids d'une base bitume de grade 50/70 ayant une pénétrabilité P₂₅ de 55 1/10 mm et une TBA de 49,6°C et disponible commercialement auprès du groupe TOTAL sous la marque AZALT®;
- 7,5% en poids de fluxant,
- 3,0% en poids de polymère styrène-butadiène,
- 0,05% en poids de fleur de soufre,
- 0,2% en poids d'octoate de zinc,
- 0,25% en poids d'une cire amide
par rapport au poids total de la composition bitumineuse fluxée.

La pseudo-viscosité STV a été mesurée selon une méthode similaire à celle décrite à l'exemple 1 à l'exception de la température qui a été fixée à 50°C (au lieu de 40°C).

La pénétrabilité à 25°C et la TBA ont été évaluées selon les mêmes méthodes que dans l'exemple précédent.

Les mesures sont données dans le tableau 5 ci-dessous.

**Tableau 5 : pénétrabilité à 25°C de compositions bitume/polymère fluxées**

| | Fluxant A | Fluxant B | Fluxant 1 | Fluxant 2 | Fluxant 3 |
|---|---|---|---|---|---|
| Pseudo-Viscosité STV 50°C, 10 mm (s) | 230 | 448 | 258 | 273 | 261 |
| Pénétrabilité à 25°C (0,1 mm) | 309 | 266 | 186 | 191 | 190 |
| TBA (°C) | 33,2 | 37,2 | 42,8 | 42,2 | 41,6 |

Au regard de ces résultats, on peut noter que les compositions bitumineuses comprenant respectivement le fluxant A et le fluxant B comprenant des quantités majoritaires d'esters présentent une pénétrabilité à 25°C très élevée, en particulier supérieure à 250 dmm, ainsi qu'une TBA faible, en particulier inférieure à 40°C.

En particulier, on peut noter que le fluxant A comparatif présente un pouvoir fluxant satisfaisant mais ne permet pas d'obtenir une pénétrabilité et une TBA satisfaisantes, puisque la pénétrabilité à 25°C est supérieure à 300 dmm et la TBA est inférieure à 35°C pour les compositions bitumineuses à base de bitume-polymère comprenant ledit fluxant A.

Au contraire, les compositions bitumineuses comprenant respectivement les fluxants 1, 2 et 3 selon l'invention présentent une pénétrabilité à 25°C faible, en particulier inférieure à 250 dmm, plus particulièrement inférieure à 200 dmm, ainsi qu'une TBA supérieure à 38°C, plus particulièrement supérieure à 40°C.

En conclusion, on peut noter que quelles que soient les compositions de bitume (compositions bitumes purs ou compositions bitumine/polymère), les compositions bitumineuses fluxées comprenant les deux fluxants hors de l'invention A et B présentent une pénétrabilité bien supérieure et une TBA bien inférieure aux compositions bitumineuses selon l'invention. En ce qui concerne les bitumes purs, on peut noter plus particulièrement que les compositions bitumineuses hors de l'invention présentent une pénétrabilité et une TBA ne répondant pas aux exigences des bitumes (purs) fluxés selon la norme NF EN 15322.

Ceci implique que les enrobés obtenus par mélange des compositions comprenant les fluxants hors de l'invention avec des granulats sont moins adaptés aux températures d'application dans le domaine routier, contrairement aux enrobés obtenus par mélange des compositions comprenant les fluxants de l'invention avec des granulats.

Ceci implique également qu'après application des enrobés obtenus par mélange des compositions comprenant les fluxants hors de l'invention avec des granulats, il peut y avoir des problèmes de ressuage du bitume quand il fait chaud du fait de sa pénétrabilité élevée, c'est-à-dire que la composition bitumineuse se désolidarise des granulats et vient à la surface de la route, ce qui a pour conséquence de causer rapidement des dégradations des propriétés mécaniques de la route, contrairement aux enrobés obtenus par mélange des compositions comprenant les fluxants de l'invention avec des granulats.

## Revendications

1. Fluxant comprenant :
- de 50% à 99% en poids d'au moins une huile hydrocarbonée qui comprend une teneur en poids d'isoparaffines allant de 90 à 100%, une teneur en poids de paraffines normales allant de 0 à 10% et une teneur en carbone d'origine biologique supérieure ou égale à 90 % par rapport au poids total de l'huile hydrocarbonée, et
- de 1% à 50% en poids d'au moins un composé d'origine végétale ou animale choisi parmi les acides gras en C₆ à C₂₄ sous forme acide, ester ou amide,
par rapport au poids total du fluxant.

2. Fluxant selon la revendication 1, comprenant :
- de 55 à 95% en poids, de préférence de 60 à 90% en poids, préférentiellement de 70 à 90% en poids, plus préférentiellement de 75 à 85% en poids, d'huile hydrocarbonée, et
- de 5 à 45% en poids, de préférence de 10 à 40% en poids, préférentiellement de 10 à 30% en poids, plus préférentiellement de 15 à 25% en poids, de composé(s) d'origine végétale ou animale,
par rapport au poids total du fluxant.

3. Fluxant selon la revendication 1 ou 2, dans lequel le composé d'origine végétale ou animale comprend au moins un ester d'acides gras obtenu avec au moins un mono-alcool ou au moins un polyol présentant de 2 à 5 groupements hydroxyle.

4. Fluxant selon l'une quelconque des revendications 1 à 3, dans lequel le composé d'origine végétale ou animale est choisi parmi les acides, esters ou amides d'huiles de pin, de colza, de tournesol, de ricin, d'arachide, de lin, de coprah, d'olive, de palme, de coton, de maïs, de suif, de saindoux, de palmiste, de soja, de courge, de pépin de raisin, d'argan, de jojoba, de sésame, de noix, de noisette, de bois de Chine, de riz.

5. Fluxant selon l'une quelconque des revendications 1 à 4, dans lequel le composé d'origine végétale ou animale comprend au moins un acide gras d'huile de pin qui est de préférence un acide gras de tall oil.

6. Fluxant selon l'une quelconque des revendications 1 à 4, dans lequel le composé d'origine végétale ou animale est choisi parmi les esters méthyliques d'acide gras.

7. Fluxant selon l'une quelconque des revendications 1 à 6, dans lequel le composé d'origine végétale ou animale comprend au moins 50% en poids, de préférence au moins 60% en poids, préférentiellement au moins 70% en poids d'acides et/ou esters choisis parmi les acides et/ou esters linoléiques et linoléniques et leurs mélanges.

8. Fluxant selon l'une quelconque des revendications 1 à 7, dans lequel l'huile hydrocarbonée est choisie parmi les isoparaffines non-cycliques comprenant de 14 à 18 atomes de carbone.

9. Fluxant selon l'une quelconque des revendications 1 à 8, dans lequel l'huile hydrocarbonée comprend :
- une teneur en poids d'isoparaffines allant de 90 à 100%, de préférence de 95 à 100% et préférentiellement de 98% à 100% par rapport au poids total de l'huile hydrocarbonée ; et/ou
- une teneur en carbone d'origine biologique supérieure ou égale à 95%, de préférence supérieure ou égale à 98% et préférentiellement de 100% ; et/ou
- une teneur en poids de paraffines normales inférieure ou égale à 10, de préférence inférieure ou égale à 5% et préférentiellement inférieure ou égale à 2% par rapport au poids total de l'huile hydrocarbonée ; et/ou
- une teneur en poids de composés naphténiques inférieure ou égale à 1%, de préférence inférieure ou égale à 0,5% et préférentiellement inférieure ou égale à 100 ppm par rapport au poids total de l'huile hydrocarbonée ; et/ou
- une teneur en poids de composés aromatiques inférieure ou égale à 500 ppm, de préférence inférieure ou égale à 300 ppm, préférentiellement inférieure ou égale à 100 ppm, plus préférentiellement inférieure ou égale à 50 ppm et avantageusement inférieure ou égale à 20 ppm, par rapport au poids total de l'huile hydrocarbonée.

10. Fluxant selon l'une quelconque des revendications 1 à 9, dans lequel l'huile hydrocarbonée est une coupe hydrocarbonée ayant un intervalle de distillation allant de 230°C à 340°C, de préférence de 235°C à 330°C, plus préférentiellement de 240°C à 325°C et avantageusement de 240°C à 280°C, mesuré selon la norme ASTM D86.

11. Utilisation, en tant que fluxant pour une composition bitumineuse, d'une composition comprenant au moins 50% en poids, par rapport au poids total de la composition, d'au moins une huile hydrocarbonée qui comprend une teneur en poids d'isoparaffines allant de 90 à 100%, une teneur en poids de paraffines normales allant de 0 à 10% et une teneur en carbone d'origine biologique supérieure ou égale à 90 % par rapport au poids total de l'huile hydrocarbonée, ladite composition comprenant éventuellement au moins 1% en poids, par rapport au poids total de la composition, d'au moins un composé d'origine végétale ou animale choisi parmi les acides gras en C₆ à C₂₄ sous forme acide, ester ou amide.

12. Utilisation selon la revendication 11, dans laquelle l'huile hydrocarbonée est telle que définie dans l'une quelconque des revendications 8 à 10 et/ou le composé d'origine végétale ou animale choisi parmi les acides gras en C₆ à C₂₄ sous forme acide, ester ou amide est tel que défini dans l'une quelconque des revendications 3 à 7.

13. Composition bitumineuse comprenant au moins un bitume et au moins un fluxant selon l'une des revendications 1 à 10, de préférence en une quantité allant de 0,5 à 50%, préférentiellement de 1 à 40% et avantageusement de 1 à 20% en poids par rapport au poids total de la composition bitumineuse.

14. Composition bitumineuse selon la revendication 13, comprenant en outre au moins un polymère, de préférence en une quantité allant de 0,5 à 20% en poids, de préférence de 1 à 10% en poids, préférentiellement de 1 à 6% en poids, par rapport au poids total de la composition bitumineuse.

15. Liant bitumineux obtenu à partir d'une composition bitumineuse selon la revendication 13 ou 14 comprenant en outre des granulats et/ou des charges minérales et/ou synthétiques.

## Patentansprüche

1. Flussmittel, umfassend:
- zu 50 - 99 Gew.-% mindestens ein Kohlenwasserstofföl, umfassend einen Isoparaffingehalt von 90 - 100 Gew.-%, einen Gehalt an normalen Paraffinen von 0 - 10 Gew.-% und einen Gehalt an Kohlenstoff biologischer Herkunft größer oder gleich 90 Gew.-%, bezogen auf das Gesamtgewicht des Kohlenwasserstofföls, und
- zu 1 - 50 Gew.-% eine Verbindung pflanzlicher oder tierischer Herkunft, die aus den C₆-C₂₄-Fettsäuren in Säure-, Ester- oder Amidform gewählt ist,
bezogen auf das Gesamtgewicht des Flussmittels.

2. Flussmittel nach Anspruch 1, umfassend:
- zu 55 - 95 Gew.-%, insbesondere 60 - 90 Gew.-%, vorzugsweise 70 - 90 Gew.-%, besonders bevorzugt 75 - 85 Gew.-% Kohlenwasserstofföl und
- zu 5 - 45 Gew.-%, insbesondere 10 - 40 Gew.-%, vorzugsweise 10 - 30 Gew.-%, besonders bevorzugt 15 - 25 Gew.-% mindestens eine Verbindung pflanzlicher oder tierischer Herkunft,
bezogen auf das Gesamtgewicht des Flussmittels.

3. Flussmittel nach Anspruch 1 oder 2, wobei die Verbindung pflanzlicher oder tierischer Herkunft mindestens einen Fettsäureester umfasst, der mit mindestens einem einwertigen Alkohol oder mindestens einem Polyol mit 2 - 5 Hydroxylgruppen erzeugt wurde.

4. Flussmittel nach einem der Ansprüche 1 - 3, wobei die Verbindung pflanzlicher oder tierischer Herkunft aus folgender Gruppe gewählt ist: Säuren, Ester oder Amide von Kien-, Raps-, Rizinus-, Erdnuss-, Lein-, Kokosnuss-, Oliven-, Palm-, Baumwollsamen-, Maiskeim-, Talg-, Schmalz-, Palmkern-, Soja-, Kürbiskern-, Traubenkern-, Argan-, Jojoba-, Sesam-, Nuss-, Haselnuss-, Tung- und Reisöl.

5. Flussmittel nach einem der Ansprüche 1 - 4, wobei die Verbindung pflanzlicher oder tierischer Herkunft mindestens eine Kienölfettsäure umfasst, bei der es sich vorzugsweise um eine Tall-Oil-Fettsäure handelt.

6. Flussmittel nach einem der Ansprüche 1 - 4, wobei die Verbindung pflanzlicher oder tierischer Herkunft aus den Fettsäuremethylestern gewählt ist.

7. Flussmittel nach einem der Ansprüche 1 - 6, wobei die Verbindung pflanzlicher oder tierischer Herkunft zu mindestens 50 Gew.-%, insbesondere mindestens 60 Gew.-%, vorzugsweise zu mindestens 70 Gew.-% Säuren und/oder Ester umfasst, die aus den Linol- und Linolensäuren und Mischungen davon gewählt sind.

8. Flussmittel nach einem der Ansprüche 1 - 7, wobei das Kohlenwasserstofföl aus den nicht-zyklischen Isoparaffinen, die 14 - 18 Kohlenstoffatome umfassen, gewählt ist.

9. Flussmittel nach einem der Ansprüche 1 - 8, wobei das Kohlenwasserstofföl umfasst:
- einen Isoparaffingehalt von 90 - 100 Gew.-%, insbesondere 95 - 100 Gew.-% und vorzugsweise 98 - 100 Gew.-%, bezogen auf das Gesamtgewicht des Kohlenwasserstofföls; und/oder
- einen Gehalt an Kohlenstoff biologischer Herkunft größer oder gleich 95 %, insbesondere größer oder gleich 98 % und vorzugsweise 100 %; und/oder
- einen Gehalt an normalen Paraffinen kleiner oder gleich 10 Gew.-%, insbesondere kleiner oder gleich 5 Gew-% und vorzugsweise kleiner oder gleich 2 Gew.-% bezogen auf das Gesamtgewicht des Kohlenwasserstofföls; und/oder
- einen Gehalt an Naphthenverbindungen kleiner oder gleich 1 Gew.-%, insbesondere kleiner oder gleich 0,5 Gew-% und vorzugsweise kleiner oder gleich 100 ppm bezogen auf das Gesamtgewicht des Kohlenwasserstofföls; und/oder
- einen gewichtsbezogenen Aromatengehalt kleiner oder gleich 500 ppm, insbesondere kleiner oder gleich 300 ppm, vorzugsweise kleiner oder gleich 100 ppm, besonders bevorzugt kleiner oder gleich 50 ppm und vorteilhafterweise kleiner oder gleich 20 ppm, bezogen auf das Gesamtgewicht des Kohlenwasserstofföls.

10. Flussmittel nach einem der Ansprüche 1 - 9, wobei das Kohlenwasserstofföl eine Kohlenwasserstofffraktion mit einem Siedebereich von 230 - 340 °C, insbesondere 235 - 330 °C, vorzugsweise 240 - 325 °C und vorteilhafterweise 240 - 280 °C nach ASTM D86 ist.

11. Verwendung einer Zusammensetzung, die, bezogen auf das Gesamtgewicht der Zusammensetzung, zu mindestens 50 Gew.-% mindestens ein Kohlenwasserstofföl mit einem Isoparaffingehalt von 90 - 100 Gew.-%, einen Gehalt an normalen Paraffinen von 0 - 10 Gew.-% und einen Gehalt an Kohlenstoff biologischer Herkunft größer oder gleich 90 Gew.-%, bezogen auf das Gesamtgewicht des Kohlenwasserstofföls, als Flussmittel für eine bituminöse Zusammensetzung, wobei die Zusammensetzung ggf. zu mindestens 1 Gew.-%, bezogen auf das Gesamtgewicht der Zusammensetzung, mindestens eine Verbindung pflanzlicher oder tierischer Herkunft umfasst, die aus den C₆-C₂₄-Fettsäuren in Säure-, Ester- oder Amidform gewählt ist.

12. Verwendung nach Anspruch 11, wobei es sich beim Kohlenwasserstofföl um ein Kohlenwasserstofföl nach einem der Ansprüche 8 - 10 handelt, und/oder es sich bei der aus den C₆-C₂₄-Fettsäuren in Säure-, Ester- oder Amidform gewählten Verbindung pflanzlicher oder tierischer Herkunft um eine Verbindung pflanzlicher oder tierischer Herkunft nach einem der Ansprüche 3 - 7 handelt.

13. Bituminöse Zusammensetzung, umfassend mindestens ein Bitumen und mindestens ein Flussmittel nach einem der Ansprüche 1 - 10, insbesondere zu 0,5 - 50 Gew.-%, vorzugsweise 1 - 40 Gew.-% und vorteilhafterweise 1 - 20 Gew.-%, bezogen auf das Gesamtgewicht der bituminösen Zusammensetzung.

14. Bituminöse Zusammensetzung nach Anspruch 13, ferner umfassend mindestens ein Polymer, insbesondere zu 0,5 - 20 Gew.-%, vorzugsweise 1 - 10 Gew.-%, besonders bevorzugt 1 - 6 Gew.-%, bezogen auf das Gesamtgewicht der bituminösen Zusammensetzung.

15. Aus einer Zusammensetzung nach Anspruch 13 oder 14 erzeugtes bituminöses Bindemittel, ferner umfassend Granulate und/oder mineralische und/oder synthetische Füllstoffe.

## Claims

1. Fluxing composition, comprising:
- 50 - 99 wt. % of at least one hydrocarbon oil having an isoparaffin content of 90 - 100 wt. %, a normal paraffin content of 0 - 10 wt. %, and a content greater than or equal to 90 wt. % of carbon of biological origin relative to the total weight of the hydrocarbon oil,
- and 1 - 50 wt. % of at least one compound of plant or animal origin selected from C₆-C₂₄ fatty acids in acid, ester, or amide form,
relative to the total weight of the fluxing composition.

2. Fluxing composition according to claim 1, comprising :
- 55 - 95 wt. %, preferably 60 - 90 wt. %, more preferably 70 - 90 wt. %, even more preferably 75 -85 wt. % hydrocarbon oil, and
- 5 - 45 wt. %, preferably 10 - 40 wt. %, more preferably 10 - 30 wt. %, even more preferably 15 - 25 wt. % compound(s) of plant or animal origin,
relative to the total weight of the fluxing composition.

3. Fluxing composition according to claim 1 or 2, wherein the compound of plant or animal origin comprises at least one fatty acid ester obtained with at least one mono-alcohol or at least one polyol having 2 - 5 hydroxyl groups.

4. Fluxing composition according to any of claims 1 - 3, wherein the compound of plant or animal origin is selected from acids, esters, or amides of pine, rape, sunflower, castor, peanut, linseed, coconut, olive, palm, cotton, corn, tallow, lard, palm kernel, soybean, squash seed, grape seed, argan, jojoba, sesame seed, nut, hazelnut, tung, and rice bran oil.

5. Fluxing composition according to any of claims 1 - 4, wherein the compound of plant or animal origin comprises at least one pine oil fatty acid that is preferably a tall oil fatty acid.

6. Fluxing composition according to any of claims 1 - 4, wherein the compound of plant or animal origin is selected from fatty acid methyl esters.

7. Fluxing composition according to any of claims 1 - 6, wherein the compound of plant or animal origin comprises at least 50 wt. %, preferably at least 60 wt. %, more preferably at least 70 wt. % of acids and/or esters chosen from linoleic and linolenic acids and/or esters and mixtures thereof.

8. Fluxing composition according to any of claims 1 - 7, wherein the hydrocarbon oil is selected from non-cyclic isoparaffins comprising 14 - 18 carbon atoms.

9. Fluxing composition according to any of claims 1 - 8, wherein the hydrocarbon oil comprises:
- an isoparaffin content of 90 - 100 wt. %, preferably 95 - 100 wt. %, and more preferably 98 - 100 wt. % relative to the total weight of the hydrocarbon oil, and/or
- a content of carbon of biological origin greater than or equal to 95 %, preferably greater than or equal to 98 %, and more preferably 100 %, and/or
- a normal paraffin content less than or equal to 10 wt.%, preferably less than or equal to 5 wt. %, and more preferably less than or equal to 2 wt. % relative to the total weight of the hydrocarbon oil, and/or
- a content of naphthenic compounds less than or equal to 1 wt.%, preferably less than or equal to 0.5 wt. %, and more preferably less than or equal to 100 ppm relative to the total weight of the hydrocarbon oil, and/or
- an aromatics content by weight less than or equal to 500 ppm, preferably less than or equal to 300 ppm, more preferably less than or equal to 100 ppm, even more preferably less than or equal to 50 ppm, and advantageously less than or equal to 20 ppm, relative to the total weight of the hydrocarbon oil.

10. Fluxing composition according to any of claims 1 - 9, wherein the hydrocarbon oil is a hydrocarbon fraction having a distillation range of 230 - 340°C, preferably 235 - 330 °C, more preferably 240 - 325 °C, and advantageously 240- 280 °C, measured in accordance with standard ASTM D86.

11. Use as a fluxing agent for a bituminous composition of a composition comprising at least 50 wt. %, relative to the total weight of the composition, of at least one hydrocarbon oil comprising an isoparaffin content of 90 - 100 wt. %, a normal paraffin content of 0 - 10 wt. %, and a content of carbon of biological origin greater than or equal to 90 wt. %, relative to the total weight of the hydrocarbon oil, wherein the composition optionally comprises at least 1 wt. % of at least one compound of plant or animal origin selected from C₆ - C₂₄ fatty acids in acid, ester, or amide form, relative to the total weight of the composition.

12. Use according to claim 11, wherein the hydrocarbon oil is as defined in any of claims 8 - 10, and/or the compound of plant or animal origin selected from C₆ - C₂₄ fatty acids in acid, ester, or amide form is as defined in any of claims 3 - 7.

13. Bituminous composition comprising at least one bitumen and at least one fluxing composition according to any of claims 1 - 10, preferably in a quantity of 0.5 - 50 wt. %, more preferably 1 - 40 wt. %, and advantageously 1 - 20 wt. % relative to the total weight of the bituminous composition.

14. Bituminous composition according to claim 13, further comprising at least one polymer, preferably in a quantity of 0.5 - 20 wt. %, preferably 1 - 10 wt. %, more preferably 1 - 6 wt. %, relative to the total weight of the bituminous composition.

15. Bituminous binder obtained from a bituminous composition according to claim 13 or 14, further comprising granulates, and/or mineral and/or synthetic fillers.
